# EUROPEAN PATENT APPLICATION

(11) **EP 4 659 989 A1**
(43) Date of publication of application: **10.12.2025**
(21) Application number: 24921100.4
(22) Date of filing: 05.02.2024
(51) Int. Cl.: B60L 7/18

(54) **CONTROL METHOD AND APPARATUS FOR IN-VEHICLE RECOVERABLE ENERGY, DEVICE, AND VEHICLE**

(30) Priority: 30.01.2024 CN 202410137245
(71) Applicant: Chongqing Changan Automobile Co., Ltd., Chongqing 400023 (CN)
(72) Inventor: YU, Li, Chongqing 400023 (CN); MIAO, Qiang, Chongqing 400023 (CN)
(74) Representative: Keller Schneider Patent- und Markenanwälte AG
(86) International application number: PCT/CN2024/076114
(87) International publication number: WO 2025/161052

(57) **Abstract**

The present application provides a control method and apparatus for in-vehicle recyclable energy, a device, and a vehicle, applied to a chassis controller. The method includes: obtaining a first power during vehicle operation, where the first power is a residual power calculated by subtracting a recycled power of an in-vehicle traction battery from a total recyclable power of the vehicle; determining whether the first power is greater than or equal to a first preset value; if yes, generating a first control signal, where the first control signal includes the first power and a first status flag, and the first status flag indicates that surplus energy is output during the vehicle operation; and sending the first control signal to a thermal management system TMS, where the first control signal is configured for controlling the thermal management system TMS to power an in-vehicle electrical device using the surplus energy, to enable the thermal management system TMS to transfer the surplus energy corresponding to the recyclable power to the in-vehicle electrical device based on the first control signal to implement power supply to the electrical device, thereby improving the utilization of surplus energy.

## Description

### Technical Field

The present application relates to the technical field of vehicle control, and specifically to a control method and apparatus for in-vehicle recyclable energy, a device, and a vehicle.

### Background Art

At low temperatures, the activity of lithium ions in batteries decreases, leading to relatively reduced capacity. As a result, the driving range of new energy vehicles is significantly affected at low temperatures, making the low-temperature range issue increasingly prominent. From the perspective of energy consumption, the driving range is primarily determined by the magnitudes of a driving power and a non-driving power. The driving power depends on driver demand and is related to vehicle resistance and a vehicle speed. The non-driving power mainly includes energy consumption from cabin heating, battery heating, and vehicle electrical accessories.

From the perspective of energy input, current energy sources include battery charging and energy recycling. In addition, reducing vehicle resistance can effectively decrease driving power demand. Multiple measures such as low aerodynamic drag and low rolling resistance have been implemented to reduce driving power demand. However, it has been observed that within non-driving power consumption, energy consumption from "cabin heating" and "battery heating" in a vehicle accounts for a significant proportion. To address energy consumption demand, manufacturers have developed an energy consumption-based economy mode for cabin heating, aiming to extend the driving range. However, this requires balancing user comfort. In addition, various trip-based algorithms have been proposed for battery heating to facilitate heating control, thereby avoiding energy consumption waste during heating.

In addition, a preheating-before-charging strategy has been proposed for battery heating to enhance battery capacity. However, this approach is generally cost-effective when preheating is performed at charging piles. Regarding the recycling of the remaining energy in a vehicle, under low-temperature conditions, the recycled power of the battery is low, a significant portion of energy cannot be recycled, leading to the waste of this portion of energy that cannot be recycled. For example, at normal temperatures, energy recycling efficiency can exceed 95%. At low temperatures, the charging power of the battery drops sharply, and the energy recycling efficiency of the system drops to 10% to 20%. Consequently, 10% to 20% of the recyclable energy is wasted.

### Summary

An objective of the present application is to maximize the full utilization of energy that cannot be recycled. For example, this part of energy is directly transferred to an electrical device, for example, is transferred to a passenger compartment or a traction battery to provide heating for the passenger compartment and heating for the traction battery through a thermal management system TMS, to improve a recycled power of energy, thereby reducing the consumption of energy for heating the passenger compartment, heating the battery, and the like from the traction battery or an engine, and also further improving the comfort in the passenger compartment and enabling the battery to reach an optimal operating temperature more quickly.

To resolve the foregoing technical problems and achieve the foregoing the beneficial effects, embodiments of the present application provide a control method and apparatus for in-vehicle recyclable energy, a device, and a vehicle. The following technical solutions are specifically disclosed.

According to a first aspect, the present application provides a control method for in-vehicle recyclable energy. The method may be applied to a chassis controller. The method includes:
obtaining a first power during vehicle operation, where the first power is a residual power calculated by subtracting a recycled power of an in-vehicle traction battery from a total recyclable power of the vehicle;
determining whether the first power is greater than or equal to a first preset value; if the first power is greater than or equal to the first preset value, generating a first control signal, where the first control signal includes the first power and a first status flag, and the first status flag indicates that surplus energy is output during the vehicle operation; and sending the first control signal to a thermal management system TMS, where the first control signal is configured for controlling the thermal management system TMS to power an in-vehicle electrical device using the surplus energy.

In the method provided in this aspect, the total recyclable power of electricity of the vehicle is first obtained, when it is determined that the power reaches the first preset value, the first control signal carrying the first power and the first status flag is then generated, and the first control signal is sent to the thermal management system TMS, to enable the thermal management system TMS to transfer the surplus energy corresponding to the recyclable power to the in-vehicle electrical device based on the first control signal to implement power supply to the electrical device, thereby improving the utilization of surplus energy.

With reference to the first aspect, in a possible implementation, the step of obtaining a first power includes: obtaining a current recyclable power of the vehicle and a recycled power of the traction battery under a specific temperature condition and a specific state of charge SOC parameter; and calculating a power difference between the current recyclable power and the recycled power to obtain the first power.

With reference to the first aspect, in another possible implementation, the method further includes: generating a second control signal if the first power is less than the first preset value, where the second control signal includes the first power and a second status flag, and the second status flag indicates that no surplus energy is output during the vehicle operation; and sending the second control signal to the thermal management system TMS, where the second control signal is configured for controlling the thermal management system TMS to power the electrical device based on an original output power.

With reference to the first aspect, in yet another possible implementation, the step of sending the first control signal to a thermal management system TMS, the method further includes: generating a third control signal when the surplus energy remains after energy is supplied to the electrical device, where the third control signal includes a second power and a third status flag, and the third status flag indicates that the surplus energy remains; and sending the third control signal to a powertrain control unit PCU, where the third control signal is configured for controlling the powertrain control unit PCU to charge an in-vehicle storage battery using the surplus energy.

With reference to the first aspect, in yet another possible implementation, it is determined that the surplus energy remains after energy is supplied to the electrical device, including: receiving indication information from the thermal management system TMS, where the indication information includes a demanded power of the thermal management system TMS for powering the electrical device; calculating a power difference between the first power and the demanded power to obtain the second power; determining whether the second power is greater than or equal to a second preset value; and if the second power is greater than or equal to the second preset value, determining that the surplus energy remains.

According to a second aspect, the present application further provides a control method for in-vehicle recyclable energy. The method may be applied to a thermal management system TMS. The method includes:
receiving a first control signal sent by a chassis controller, where the first control signal includes a first power and a first status flag;
determining that surplus energy is output during vehicle operation based on the first status flag, where the surplus energy corresponds to the first power;
searching a first preset relationship based on the first power for a matching first outlet temperature, and determining an operating level and a demanded power of a high-pressure heater corresponding to the first outlet temperature; and
transferring the surplus energy to an electrical device based on the operating level and the demanded power.

Optionally, the electrical device includes a passenger compartment and the traction battery.

With reference to the second aspect, in a possible implementation, after the step of determining an operating level and a demanded power of a high-pressure heater corresponding to the first outlet temperature, the method further includes: sending indication information to the chassis controller, where the indication information includes the demanded power for powering the electrical device.

With reference to the second aspect, in another possible implementation, the method further includes: receiving a second control signal sent by the chassis controller, where the second control signal includes a second power and a second status flag; determining that no surplus energy is output during the vehicle operation based on the second status flag; and controlling the high-pressure heater to power the electrical device based on an original level and power.

In the method provided in this aspect, surplus energy is transferred to the electrical device through the thermal management system TMS, for example, to provide heating for the passenger compartment and heating for the battery, to improve a recycled power of energy, thereby reducing the consumption of energy for heating the passenger compartment, heating the battery, and the like from the traction battery or an engine, and also further improving the comfort in the passenger compartment and enabling the battery to reach an optimal operating temperature more quickly.

According to a third aspect, the present application further provides a control method for in-vehicle recyclable energy. The method may be applied to a powertrain control unit PCU. The method includes: receiving a third control signal sent by a chassis controller, where the third control signal includes a second power and a third status flag; determining that surplus energy remains during vehicle operation based on the third status flag, where the surplus energy corresponds to the second power; searching a second preset relationship based on the second power for a matching target charging voltage; and charging an in-vehicle storage battery using the surplus energy based on the target charging voltage.

In the method provided in this aspect, remaining energy may alternatively be transferred to the storage battery through the powertrain control unit PCU to charge the storage battery, thereby further improving the utilization of recyclable energy.

According to a fourth aspect, the embodiments of the present application further provide a control apparatus for in-vehicle recyclable energy. The apparatus includes:
an obtaining unit, configured to obtain a first power during vehicle operation, where the first power is a residual power calculated by subtracting a recycled power of an in-vehicle traction battery from a total recyclable power of the vehicle;
a judgment unit, configured to determine whether the first power is greater than or equal to a first preset value;
a generation unit, configured to generate a first control signal when it is determined that the first power is greater than or equal to the first preset value, where the first control signal includes the first power and a first status flag, and the first status flag indicates that surplus energy is output during the vehicle operation; and
a first sending unit, configured to send the first control signal to a thermal management system TMS, where the first control signal is configured for controlling the thermal management system TMS to power an in-vehicle electrical device using the surplus energy.

With reference to the fourth aspect, in a possible implementation, the obtaining unit is further configured to obtain a current recyclable power of the vehicle and a recycled power of the traction battery under a specific temperature condition and a specific state of charge SOC parameter, and calculate a power difference between the current recyclable power and the recycled power to obtain the first power.

With reference to the fourth aspect, in another possible implementation, the generation unit is further configured to generate a second control signal when the judgment unit determines that the first power is less than the first preset value, where the second control signal includes the first power and a second status flag, and the second status flag indicates that no surplus energy is output during the vehicle operation.

The first sending unit is further configured to send the second control signal to the thermal management system TMS, where the second control signal is configured for controlling the thermal management system TMS to power the electrical device based on an original output power.

With reference to the fourth aspect, in yet another possible implementation, the generation unit is further configured to generate a third control signal when the surplus energy remains after energy is supplied to the electrical device, where the third control signal includes a second power and a third status flag, and the third status flag indicates that the surplus energy remains.

The first sending unit is further configured to send the third control signal to a powertrain control unit PCU, where the third control signal is configured for controlling the powertrain control unit PCU to charge an in-vehicle storage battery using the surplus energy.

With reference to the fourth aspect, in yet another possible implementation, the apparatus further includes a first receiving unit, a calculation unit, and a first determining unit, where
the first receiving unit is configured to receive indication information from the thermal management system TMS, where the indication information includes a demanded power of the thermal management system TMS for powering the electrical device;
the calculation unit is configured to calculate a power difference between the first power and the demanded power to obtain the second power;
the judgment unit is further configured to determine whether the second power is greater than or equal to a second preset value; and
the first determining unit is configured to determine that the surplus energy remains when the judgment unit determines that the second power is greater than or equal to the second preset value.

According to a fifth aspect, the present application further provides another control apparatus for in-vehicle recyclable energy. The apparatus includes:
a second receiving unit, configured to receive a first control signal sent by a chassis controller, where the first control signal includes a first power and a first status flag;
a second determining unit, configured to determine that surplus energy is output during vehicle operation based on the first status flag, where the surplus energy corresponds to the first power; and search a first preset relationship based on the first power for a matching first outlet temperature, and determine an operating level and a demanded power of a high-pressure heater corresponding to the first outlet temperature; and
a transfer unit, configured to transfer the surplus energy to an electrical device based on the operating level and the demanded power.

With reference to the fifth aspect, in a possible implementation, the apparatus further includes: a second sending unit, configured to send indication information to the chassis controller after the operating level and the demanded power of the high-pressure heater corresponding to the first outlet temperature are determined, where the indication information includes the demanded power for powering the electrical device.

With reference to the fifth aspect, in another possible implementation, the second receiving unit is further configured to receive a second control signal sent by the chassis controller, where the second control signal includes a second power and a second status flag;
the second determining unit is further configured to determine that no surplus energy is output during the vehicle operation based on the second status flag; and
a control unit is configured to control the high-pressure heater to power the electrical device based on an original level and power.

According to a sixth aspect, the present application further provides another control apparatus for in-vehicle recyclable energy. The apparatus includes:
a third receiving unit, configured to receive a third control signal sent by a chassis controller, where the third control signal includes a second power and a third status flag;
a third determining unit, configured to determine that surplus energy remains during vehicle operation based on the third status flag, where the surplus energy corresponds to the second power;
a search unit configured to search a second preset relationship based on the second power for a matching target charging voltage; and
an electrical energy control unit, configured to charge an in-vehicle storage battery using the surplus energy based on the target charging voltage.

According to a seventh aspect, the present application further provides an electronic device, including a memory and a processor, where the memory is connected to the processor;
the memory stores computer instructions; and
the processor executes the computer instructions to perform the control method for in-vehicle recyclable energy in the foregoing first aspect to third aspect or any implementation thereof.

According to an eighth aspect, the present application further provides a control system for in-vehicle recyclable energy, where the system includes a chassis controller, a thermal management system TMS, a powertrain control unit PCU, a high-pressure heater, an electrical device, a DC converter, and a storage battery, where
the chassis controller is connected to the thermal management system TMS and the powertrain control unit PCU, the thermal management system TMS is connected to the electrical device through the high-pressure heater, and the powertrain control unit PCU is connected to the storage battery through the DC converter;
the chassis controller is configured to perform the method in the foregoing first aspect or any implementation in the first aspect;
the thermal management system TMS is configured to perform the method in the foregoing second aspect or any implementation in the second aspect, and supply energy to the electrical device through the high-pressure heater; and
the powertrain control unit PCU is configured to perform the method in the foregoing third aspect, and charge the storage battery through the DC converter.

According to a ninth aspect, the present application further provides a vehicle, including the control system for in-vehicle recyclable energy in the foregoing eighth aspect.

In addition, the present application further provides a computer-readable storage medium, where the computer-readable storage medium has computer instructions stored therein, and the computer instructions are configured to enable a computer to perform the control method for in-vehicle recyclable energy in the foregoing first aspect to third aspect or any implementation thereof.

The control method and apparatus for in-vehicle recyclable energy and the device provided in the present application implement closed-loop control. The total recyclable power of electricity of the vehicle is first obtained, when it is determined that the power reaches the first preset value, the first control signal carrying the first power and the first status flag is then generated, and the first control signal is sent to the thermal management system TMS, to enable the thermal management system TMS to transfer the surplus energy corresponding to the recyclable power to the in-vehicle electrical device based on the first control signal to implement power supply to the electrical device, thereby improving the utilization of surplus energy.

In addition, if the surplus energy still remains, the powertrain control unit PCU is controlled through the second control signal to transfer the remaining surplus energy to the storage battery, thereby achieving the full utilization of surplus energy. This method utilizes recycled energy more accurately, so that not only the utilization of recycled energy at low temperatures is improved and the non-driving power consumption of the system is reduced, but also the effect of improving the driving range at low temperatures can be further achieved. Moreover, the temperature rise time for the passenger compartment and the battery is further shortened, thereby improving the comfort in the passenger compartment, and ensuring that the battery can operate at an optimal temperature boundary as soon as possible without adding any hardware costs.

### Brief Description of the Drawings

To describe the technical solutions in specific embodiments of the present application or the prior art more clearly, the following briefly introduces the accompanying drawings required for describing the specific embodiments or the prior art. Apparently, the accompanying drawings in the following description show some embodiments of the present application, and persons of ordinary skill in the art may still derive other drawings from these accompanying drawings without creative efforts.
FIG. 1 is an architectural diagram of an in-vehicle energy recycling system according to an embodiment of the present application;
FIG. 2 is a flowchart of a control method for in-vehicle recyclable energy according to an embodiment of the present application;
FIG. 3 is a flowchart of another control method for in-vehicle recyclable energy according to an embodiment of the present application;
FIG. 4 is a flowchart of yet another control method for in-vehicle recyclable energy according to an embodiment of the present application;
FIG. 5 is a flowchart of yet another control method for in-vehicle recyclable energy according to an embodiment of the present application;
FIG. 6 is a flowchart of yet another control method for in-vehicle recyclable energy according to an embodiment of the present application;
FIG. 7 is a schematic diagram of recycling of a surplus power according to an embodiment of the present application;
FIG. 8 is a structural block diagram of an energy control apparatus according to an embodiment of the present application;
FIG. 9 is a structural block diagram of another energy control apparatus according to an embodiment of the present application;
FIG. 10 is a structural block diagram of yet another energy control apparatus according to an embodiment of the present application;
FIG. 11 is a schematic structural diagram of an electronic device according to an embodiment of the present application; and
FIG. 12 is a schematic structural diagram of a vehicle according to an embodiment of the present application.

### Detailed Description

The embodiments of the present application are described below with reference to the accompanying drawings and preferred embodiments, and those skilled in the art can easily understand other advantages and efficacy of the present application through the content disclosed in this specification. The present application may also be implemented or applied through other specific embodiments, and various modifications or changes may also be made to various details in this specification based on different views and applications without departing from the spirit of the present application. It should be understood that the preferred embodiments are only used for describing the present application rather than limiting the scope of protection of the present application.

It should be noted that the drawings provided in the following embodiments schematically describe the basic concept of the present application, and only the components related to the present application are shown in the drawings, which are not drawn in accordance with the number, shape, and size of the components in actual implementation, and the actual implementation of the components, the number, and the proportion of the components may be changed arbitrarily, and the layout of the components may be more complex.

In addition, the terms "first" and "second" are used only for description, but are not intended to indicate or imply relative importance or implicitly specify a quantity of indicated technical features. Therefore, a feature limited by "first" or "second" may explicitly or implicitly include one or more features. In the description of the present application, the term "plurality of" means at least two, for example, two, three, or the like, unless specifically and specifically limited otherwise.

The present application is described below in detail with reference to the accompanying drawings and specific embodiments.

The technical solutions provided in the present application intend to maximize the utilization of energy that cannot be recycled. To achieve this objective, embodiments of the present application provide a control method for in-vehicle recyclable energy. This part of energy is directly used on electrical devices, for example, used to provide heating for a passenger compartment and heating for a battery, or if the surplus energy/electrical energy still remains, a 12V storage battery may be further charged, to improve a recycled power of energy, thereby reducing the consumption of energy for heating the passenger compartment, heating the battery, charging the 12V storage battery, and the like from the traction battery or an engine, and also further improving the comfort in the passenger compartment and enabling the battery to reach an optimal operating temperature more quickly.

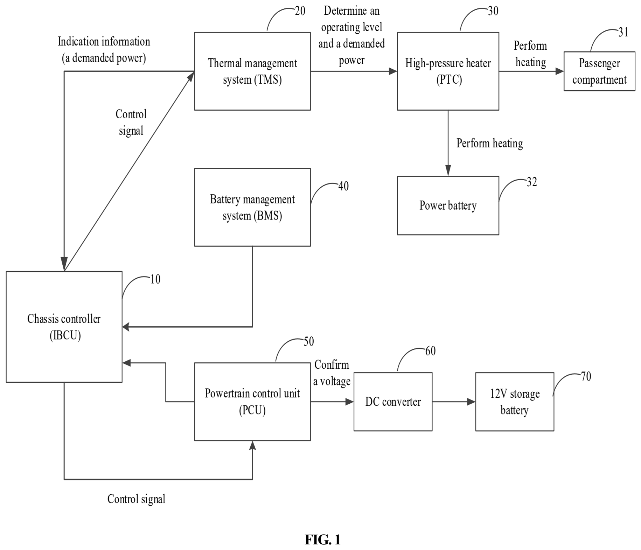

FIG. 1 is an architectural diagram of an in-vehicle energy recycling system according to an embodiment of the present application. The system includes a chassis controller 10, a thermal management system (TMS) 20, a high-pressure heater 30, a passenger compartment 31, a traction battery 32, a battery management system (BMS) 40, a powertrain control unit (PCU) 50, a DC converter 60, and a 12V storage battery 70. In addition, the system may further include another unit or structure, for example, an electric motor. This is not limited in this embodiment.

The chassis controller 10 is connected to the thermal management system TMS 20, the battery management system BMS 40, and the powertrain control unit PCU 50 through a signal bus, which may communicate through signal transmission, for example, controller area network (CAN) signal transmission, and may transmit a control signal.

The thermal management system TMS 20 and the high-pressure heater 30 may also perform signal transmission. The high-pressure heater 30 may be connected to the passenger compartment 31 and the traction battery 32 in a manner of a circuit, other hardware, or the like.

Optionally, the chassis controller may be controlled through an energy recycling control unit. Further, the energy recycling control unit may be an integrated backhaul control unit (IBCU), and is a device or unit configured to manage and control a backhaul connection in a communication network. Backhaul is a network connection for transmitting a signal from an edge device or a user terminal back to a core network or a data center. The IBCU has the function of being responsible for managing a backhaul connection to ensure effective data transmission and network performance, usually includes components such as a router, a switch, a transmission device, and management software, and is configured to control and optimize the bandwidth, quality, security, and the like of a backhaul link. In this embodiment, the IBCU is responsible for generating and sending at least one control signal to the thermal management system TMS 20 and the powertrain control unit PCU 50, to indicate the thermal management system TMS 20 and the powertrain control unit PCU 50 to consume surplus energy, thereby improving the utilization of recyclable energy.

The powertrain control unit PCU 50 is a core control unit of an electric driving system, and is responsible for controlling energy conversion between the battery and the electric motor and the operation of the electric motor.

The DC converter 60 is configured to perform direct current DC-to-DC voltage conversion on electrical energy output by the powertrain control unit PCU 50 to obtain electrical energy suitable for charging the 12V storage battery.

In addition, in the field of vehicle control, PTC may refer to a positive temperature coefficient thermistor or another related device, for example, the high-pressure heater 30. The PTC, i.e., the positive temperature coefficient thermistor, is a special resistor whose resistance value increases as the temperature rises. In a vehicle, the PTC may be used in a high-pressure heater system. The high-pressure heater (PTC heater) is an apparatus that heats air inside the vehicle using characteristics of a PTC element. The high-pressure heater 30 is usually used in an electric vehicle or a hybrid electric vehicle, and is configured to provide a heating function inside the vehicle. A current passes through the PTC element, and the resistance of the PTC element rises as the current passes to generate heat. Such a heater can quickly provide warm air, and is more efficient than a conventional heater. The heater effectively provides in-vehicle comfort and the heating function, and can effectively control energy consumption and improve energy utilization.

In the method provided in this embodiment, energy that cannot be recycled by a battery at a low temperature can be used for another part that requires energy consumption, for example, for PTC heating or charging a 12V storage battery, and energy consumption demand and an energy recycling status are linked in real time in terms of control for closed-loop control, thereby improving energy recycling and utilization, reducing the obtaining of energy of non-driving power consumption from a power source, improving the pure electric driving range at low temperatures and reducing the comprehensive fuel consumption of hybrid driving, and further improving the comfort in the passenger compartment and battery performance.

Specifically, when the vehicle enters a coasting or braking mode, the chassis controller 10 calculates a recycled power. Moreover, the chassis controller 10 receives signals such as a recycled power boundary of a battery, PTC power demand, the capacity of a 12V storage battery, and a DC conversion low-voltage end voltage, to distribute a total recycled power.

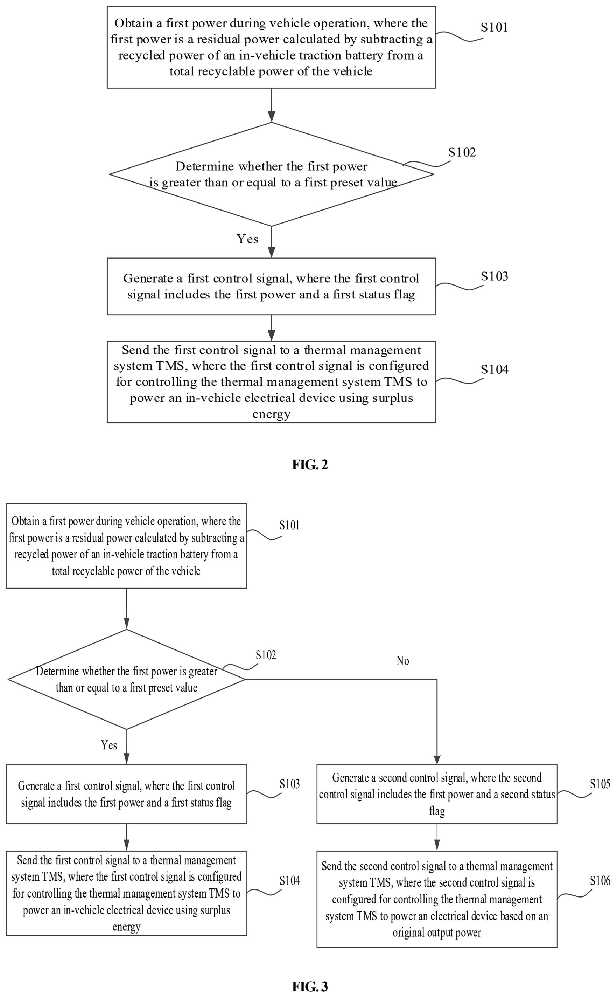

FIG. 2 shows a control method for in-vehicle recyclable energy according to an embodiment of the present application. The method may be applied to the foregoing chassis controller 10. The method includes the following steps.

Step S101. Obtain a first power during vehicle operation, where the first power is a residual power calculated by subtracting a recycled power of an in-vehicle traction battery from a total recyclable power of the vehicle.

Specifically, Step S101 specifically includes: obtaining a current recyclable power of the vehicle and a recycled power of the traction battery under a specific temperature condition and a specific state of charge SOC parameter; and calculating a power difference between the current recyclable power and the recycled power to obtain the first power.

During vehicle operation, the IBCU monitors a vehicle speed signal, a braking pedal signal, and the like in real time. When a braking pedal position and a pedal depth are detected, a current recyclable total power Ptotal, that is, a current recyclable power of the vehicle, is calculated based on a deceleration, a vehicle speed, a vehicle weight, vehicle resistance, a slope, and the like.

A recycled power of the traction battery under a specific temperature condition and a specific State of Charge (SOC, a charge status of the battery) parameter may be measured and reported by the battery management system BMS 40. The specific temperature condition includes a low-temperature condition, or an extreme cold condition, for example, -30°C. The recycled power of the traction battery corresponding to the traction battery when the battery is at a specific SOC percentage. The recycled power of the traction battery has a power unit of kW.

Table 1 shows a mapping relationship of the recycled power boundary of the traction battery. Recycled powers of the traction battery corresponding to different temperatures and different SOC percentages are reflected in Table 1, and are represented by "kw01 to kw86" in this embodiment. 01 to 86 are sequence numbers, and do not represent specific data. Specific data may be obtained through experiments or tests. This is not limited in this embodiment.

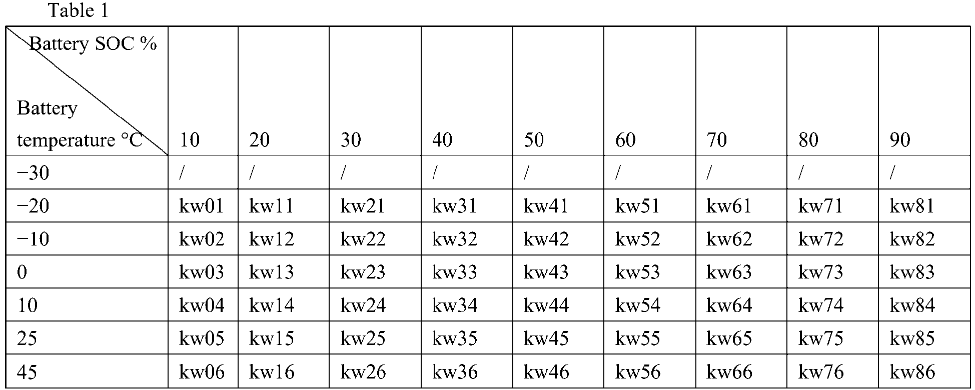

Based on the foregoing Table 1 and the current recyclable total power Ptotal, the first power may be calculated.

Optionally, the first power is represented as "P1", or P1 represents Delt_Precycle1.

Step S102. Determine whether the first power is greater than or equal to a first preset value.

The first preset value may be preset by the system or customized according to actual vehicle conditions. This is not limited in this embodiment.

Step S103. If yes, generate a first control signal, where the first control signal includes the first power and a first status flag, and the first status flag indicates that surplus energy is output during the vehicle operation.

If it is determined that the first power P1 is greater than or equal to the first preset value, it is determined that currently the vehicle has surplus energy, and the surplus energy may be recycled. In addition, when it is determined that P1 = Delt_Precycle1 is greater than or equal to the first preset value, the first status flag is set. The status flag is configured for representing a state of a surplus capacity or surplus energy at a different moment, and may usually be indicated by a symbol "0" or "1". The status flag may be represented by "B_Recycle". For example, when P1 = Delt_Precycle1 is greater than or equal to the first preset value, the first status flag is set to B_Recycle1 = 1. In contrast, when P1 = Delt_Precycle1 is less than the first preset value, a second status flag is set to B_Recyclel = 0.

In this embodiment, the first status flag B_Recycle1 is set to 1, indicating that surplus energy is output during the vehicle operation.

In addition, the first control signal, for example, a first CAN signal, that contains the first status flag B_Recycle1 = 1 and the first power P1 is further generated.

Step S104. Send the first control signal to a thermal management system TMS, where the first control signal is configured for controlling the thermal management system TMS to power an in-vehicle electrical device using the surplus energy.

The first control signal, for example, the first CAN signal, that contains the first status flag B_Recyclel = 1 and the first power P1, is sent to the thermal management system TMS 20, to enable the thermal management system TMS 20 to supply the surplus energy to the electrical device, for example, transfer the surplus energy to the passenger compartment 31 and the traction battery 32 through the high-pressure heater 30.

Optionally, in some implementations, as shown in FIG. 3, the method further includes the following steps.

Step S105. Generate a second control signal if the first power is less than the first preset value, where the second control signal includes the first power and a second status flag.

The second status flag indicates that no surplus energy is output during the vehicle operation. Optionally, the value of the second status flag B_Recyclel is set 0.

Step S106. Send the second control signal to the thermal management system TMS, where the second control signal is configured for controlling the thermal management system TMS to power the electrical device based on an original output power.

The chassis controller 10 sends the second control signal, for example, a second CAN signal, that contains the second status flag B_Recycle1 = 0 and the first power P1, to the thermal management system TMS 20.

In the method provided in this aspect, the total recyclable power of electricity of the vehicle is first obtained, when it is determined that the power reaches the first preset value, the first control signal carrying the first power and the first status flag is then generated, and the first control signal is sent to the thermal management system TMS, to enable the thermal management system TMS to transfer the surplus energy corresponding to the recyclable power to the in-vehicle electrical device based on the first control signal to implement power supply to the electrical device, thereby improving the utilization of surplus energy.

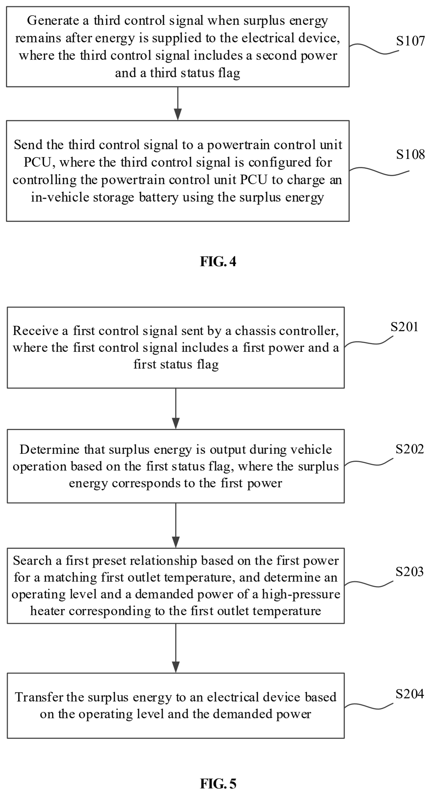

Optionally, in some implementations, after Step S106, as shown in FIG. 4, the method further includes the following steps.

Step S107. Generate a third control signal when the surplus energy remains after energy is supplied to the electrical device, where the third control signal includes a second power and a third status flag.

The third status flag indicates that the surplus energy remains. This step is performed when it is further detected that the surplus energy remains after energy corresponding to the first power P1 is transferred to the thermal management system TMS 20 for consumption by the electrical device, and the third control signal is generated. The third control signal includes the second power P2 and the third status flag B_Recycle2, and the value of the third status flag B_Recycle2 is 1.

Step S108. Send the third control signal to a powertrain control unit PCU, where the third control signal is configured for controlling the powertrain control unit PCU to charge an in-vehicle storage battery using the surplus energy.

For example, the powertrain control unit PCU transfers the surplus energy to the 12V storage battery through the DC converter based on the third control signal to charge the 12V storage battery.

Further, in the foregoing Step S107, it is determined whether the surplus energy remains after the thermal management system TMS supplies energy to the electrical device, including:
receiving indication information from the thermal management system TMS, where the indication information includes a demanded power of the thermal management system TMS for powering the electrical device; calculating a power difference between the first power and the demanded power to obtain the second power; determining whether the second power P2 is greater than or equal to a second preset value. The second preset value may be the same as or not the same as the first preset value in the foregoing Step S102. This is not limited in this embodiment.

If yes, it is determined that the surplus energy remains. If not, it is determined that no surplus energy remains.

In the method provided in this embodiment, when it is detected that the surplus energy remains, the surplus energy may alternatively be transferred to the storage battery through the powertrain control unit PCU to charge the storage battery, thereby further improving the utilization of recyclable energy.

In another embodiment, the present application further provides a control method for in-vehicle recyclable energy. The method is applied to a thermal management system TMS 20. As shown in FIG. 5, the method includes the following steps.

Step S201. Receive a first control signal sent by a chassis controller, where the first control signal includes a first power and a first status flag.

The step corresponds to Step S104 in the foregoing embodiment. The thermal management system TMS 20 receives the first control signal through a CAN bus.

Step S202. Determine that surplus energy is output during vehicle operation based on the first status flag, where the surplus energy corresponds to the first power.

Specifically, the thermal management system TMS 20 determines, based on the first status flag B_Recyclel = 1, that the surplus energy remains during the vehicle operation. The thermal management system TMS 20 and the chassis controller 10 agree in advance that different field content of the status flag B_Recycle represents different meanings. For example, the field "1" represents that surplus energy remains. The field "0" represents that no recyclable surplus energy remains.

In addition, it is further obtained through the first control signal, for example, the first CAN signal, that a power corresponding to current surplus energy is a first power P1.

Step S203. Search a first preset relationship based on the first power for a matching first outlet temperature, and determine an operating level and a demanded power of a high-pressure heater corresponding to the first outlet temperature.

The first preset relationship is a mapping relationship between an outlet temperature and a recycled power P. The recycled power P may be represented as "Delt_Precyclel". For example, the first power P1 = Delt_Precycle1. Specifically, Table 2 is a schematic table of the first preset relationship.

**Table 2**

| Delt_Precycle1 (Unit: kw) | 0 | 1 | 2 | 3 | 4 | 5 | 6 |
|---|---|---|---|---|---|---|---|
| PTC target outlet temperature Δ (unit: °C) | T1 | T1+10 | T1+20 | T1+20 | T1+25 | T1+25 | T1+30 |
| Note: The target outlet temperature in the table is a delta value, and this value is added to the original basis. | | | | | | | |

In Table 2, the original basis outlet temperature is T1, and this value is a value with "+", for example, 10, 20, 35, or 30.

The PTC target outlet temperature is an expected water temperature value set in the high-pressure heater 30. Because the high-pressure heater 30 is configured to provide a heating function inside the vehicle, the target outlet temperature is an expected temperature of heating water. This temperature may be set and adjusted according to an actual requirement and user preference.

Further, the target outlet temperature depends on a specific vehicle model, a heating system design, and a demanded heating effect. Different vehicles and application scenarios, for example, an in-vehicle warm air system and a battery thermal management system, may have different target water temperature requirements. In the high-pressure heater 30 of the vehicle, the target outlet temperature is achieved by controlling a current and a heating time. Water in the heater may reach a set target temperature by controlling the magnitude of the current and the length of the heating time. In this way, it can be ensured that the heating effect of air inside the vehicle or in another application scenario meets expected demand.

In this embodiment, the high-pressure heater 30 first searches the first preset relationship in Table 1 through the first power P1 for a PTC target outlet temperature Δ corresponding to P1, then each target outlet temperature Δ is in turn associated with the operating level and the demanded power, and the operating level of supplying power to the electrical device and the demanded power of the electrical device may be determined through the target outlet temperature Δ.

In this embodiment, the electrical device includes a passenger compartment 31 and the traction battery 32.

Step S204. Transfer the surplus energy to an electrical device based on the operating level and the demanded power.

The high-pressure heater 30 transfers energy to the passenger compartment 31 and the traction battery 32 based on the operating level and the demanded power corresponding to the first power P1, for example, provides heating for the passenger compartment 31, and provides heating for the traction battery 32.

In addition, after the high-pressure heater 30 determines the operating level and the demanded power of the high-pressure heater corresponding to the first outlet temperature, the method further includes: sending indication information to the chassis controller 10, where the indication information includes the demanded power for powering the electrical device.

Optionally, the indication information may be transmitted to the chassis controller 10 through a CAN signal, to enable the chassis controller 10 to know the required amount of energy and the amount of recyclable energy to be consumed of the thermal management system TMS 20.

In addition, the foregoing method further includes: receiving, by the thermal management system TMS 20, a second control signal sent by the chassis controller 10, where the second control signal includes a second power and a second status flag. The step corresponds to Step S106 in the foregoing embodiment.

The thermal management system TMS 20 determines that no surplus energy is output during the vehicle operation based on the second status flag; and controls the high-pressure heater to power the electrical device based on an original level and power.

The second status flag B_Recyclel = 0, represents that currently no recyclable remaining energy exists.

In the method provided in this embodiment, surplus energy is transferred to the electrical device through the thermal management system TMS, for example, to provide heating for the passenger compartment and heating for the battery, to improve a recycled power of energy, thereby reducing the consumption of energy for heating the passenger compartment, heating the battery, and the like from the traction battery or an engine, and also further improving the comfort in the passenger compartment and enabling the battery to reach an optimal operating temperature more quickly.

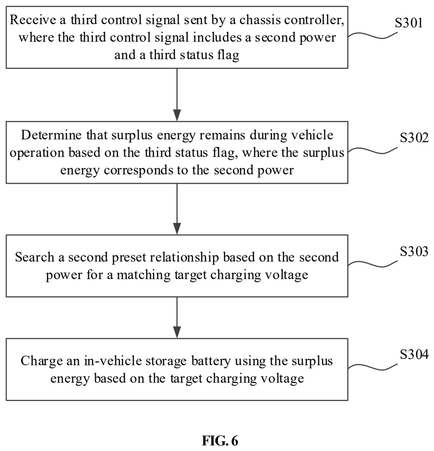

In addition, in another embodiment, a control method for in-vehicle recyclable energy is further provided, applied to a powertrain control unit PCU. As shown in FIG. 6, the method further includes the following steps.

Step S301. Receive a third control signal sent by a chassis controller, where the third control signal includes a second power and a third status flag.

The Step corresponds to Step S108 in the foregoing embodiment. For a specific process, refer to the foregoing description of the foregoing Step S301. Details are not described herein again in this embodiment. The third control signal includes the second power P2 and the third status flag B_Recycle2.

Step S302. Determine that surplus energy remains during vehicle operation based on the third status flag, where the surplus energy corresponds to the second power.

Specifically, if the third status flag B_Recycle2 = 1, it is determined that the surplus energy remains during vehicle operation. The surplus energy corresponds to the second power P2, P2 = P1 - Pdemanded power, and Pdemanded power is the energy/power determined by the thermal management system TMS 20 to be supplied to the electrical device in the foregoing Step S204.

Optionally, the second power P2 is represented by Delt_Precycle1_W, the unit being W.

Step S303. Search a second preset relationship based on the second power for a matching target charging voltage.

The second preset relationship is a mapping relationship between Delt_Precycle1 and a target charging voltage V of the storage battery. The mapping relationship may be preset and stored in the powertrain control unit PCU, as shown in Table 3.

**Table 3**

| Delt_Precycle1 (W) | 0 | 100 | 200 | 300 | 400 | ... |
|---|---|---|---|---|---|---|
| Target charging voltage (V) of the 12V storage battery | V1 | V2 | V3 | V4 | V5 | ... |

The powertrain control unit PCU determines the target charging voltage of the storage battery from the second preset relationship in Table 3 based on the second power P2 = Delt_Precycle1. The storage battery is generally a 12V storage battery. For example, in an example, the second power P2 = 100 W, and it is found based on P2 = 100 W that the matching target charging voltage is V2.

Step S304. Charge an in-vehicle storage battery using the surplus energy based on the target charging voltage.

The powertrain control unit PCU charges the in-vehicle storage battery based on the target charging voltage determined in Step S303. For example, the target charging voltage V2 is used to transfer surplus electrical energy to the 12V storage battery through a DC converter to charge the 12V storage battery.

In the method provided in this embodiment, remaining energy may be transferred to the storage battery through the powertrain control unit PCU to charge the storage battery, thereby further improving the utilization of recyclable energy.

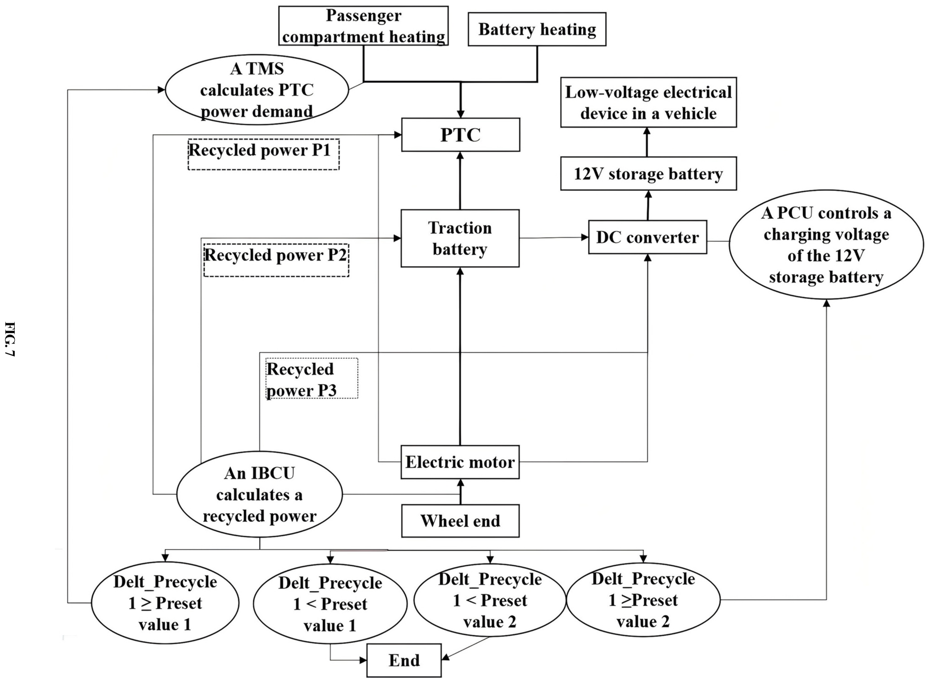

In the embodiments of the present application, demand of non-driving power consumption and availability of energy recycling is linked. The target of non-driving power consumption is adjusted in real time, so that when another system, for example, the battery, has reached a recycling boundary thereof and a recycled power is restricted, the remaining recycled energy can be utilized as much as possible. The logic diagram is shown in FIG. 7.

In addition, if the surplus energy still remains, the target charging voltage of the 12V storage battery is further linked to the availability of energy recycling. The target voltage of the 12V storage battery is adjusted in real time to improve the charging rate, so that electricity can be stored as soon as possible for use by the low-voltage load of the vehicle. The logic diagram is shown in FIG. 7.

Based on the foregoing two points, a specific implementation process is as follows:
Before the solution is implemented, the recycled power of the traction battery needs to be confirmed in the system, as shown in Table 1 above. A plug-in hybrid electric model is used as an example. An environmental boundary is below -5°C. The heating for the passenger compartment and the heating for the battery are both active. The operating conditions are urban conditions. Under urban conditions, braking is frequent, and a recycled power of braking energy may basically range from 20 kw to 40 kw. When a vehicle is heavier, more energy is recyclable. At low temperatures, a charging power of the battery is low, and more energy cannot be recycled. The present application proposes a control method for a recyclable power to reuse this part of wasted energy.

Specifically, the vehicle is powered on, and normal operation starts. Controllers such as the chassis controller IBCU, the powertrain control unit PCU, the battery management system BMS, the thermal management system TMS enter an operating state. The IBCU monitors a vehicle speed signal, a braking pedal signal, and the like in real time. When a braking pedal position and a pedal depth are detected, a current recyclable total power Ptotal is calculated based on a deceleration, a vehicle speed, a vehicle weight, vehicle resistance, a slope, and the like.

In addition, the chassis controller IBCU 10 synchronously searches Table 1 for the recycled power P_batt_recycle of the traction battery, and calculates a difference value between Ptotal and the recycled power P_batt_recycle of the battery to obtain the first power P1 = Delt_Precycle1, and Delt_Precycle1 is determined. If Delt_Precycle1 ≥ the preset value 1 (that is, the first preset value), the IBCU sends the first control signal to the CAN bus. The first control signal may be transmitted to the thermal management system TMS 20 through the CAN bus. The first control signal includes the first power P1 and the first status flag B_Recycle1 = 1. Specifically, the foregoing process corresponds to the foregoing Step S101 to S104.

As shown in FIG. 7, if Delt_Precycle1 < preset value 1, the IBCU sends the second control signal. The second control signal carries the second status flag B_Recycle1 = 0 and the first power P1 to the CAN bus.

Further, the thermal management system TMS 20 receives the first control signal through the CAN bus, searches Table 2 for the value of the PTC target outlet temperature Δ based on the first status flag B_Recycle1 = 1 in the first control signal, and adds an original PTC outlet target temperature to the value of Δ obtained through table lookup to output a final PTC outlet target temperature. The TMS calculates a final PTC level and a corresponding power P based on the outlet target temperature, for example, calculates a recycled power P1. In addition, the method further includes: sending, by the thermal management system TMS 20, the PTC target power to the chassis controller.

The thermal management system TMS 20 performs the functions of heating the passenger compartment and heating the battery. For example, the recycled power P1 is transferred to the passenger compartment and the battery through the PTC to provide heating for the passenger compartment and heating for the battery. The thermal management system TMS 20 further transfers a recycled power P2 to the traction battery to charge the traction battery.

In addition, the thermal management system TMS 20 feeds back indication information to the chassis controller 10 through the control signal, for example, a P_ptc_targt signal.

Optionally, if the thermal management system TMS 20 receives the second status flag B_Recycle1 = 0 of the CAN bus, it representing that currently no recyclable surplus energy remains, and in this case, a target water level of the PTC is maintained at an original output value of the TMS.

The chassis controller 10 receives the indication information from the thermal management system TMS 20, including the recycled power P_batt_recycle of the battery and the target power of the PTC. A difference value between the recycled power P_batt_recycle of the battery and the target power P_ptc_targt of the PTC is calculated to obtain Delt_Precycle2, and the second power P2 is determined. If Delt _Precycle2 ≥ a preset value 2 (that is, the second preset value), it is determined that energy remains. The chassis controller 10 generates and sends the third control signal to the CAN bus. The CAN bus is a communication link between the chassis controller and the powertrain control unit PCU 50. The third control signal includes the second power P2 and the third status flag B_Recycle2 = 1.

If the second power P2 = Delt_Precycle2 < preset value 2, a fourth control signal is sent to the powertrain control unit PCU 50. The fourth control signal includes the second status flag B_Recycle2 = 0. The powertrain control unit PCU 50 determines that if the value of the second status flag B_Recycle2 is "1", it represents that the energy remains, and is usable. If the value is "0", no remaining energy is usable.

When B_Recycle2 = 1, the powertrain control unit PCU 50 raises the voltage of the 12V storage battery. After the voltage rises, the remaining part of energy is transferred to the 12V storage battery to charge the 12V storage battery.

Specifically, the powertrain control unit PCU 50 searches the foregoing Table 3 for the target charging voltage of the 12V storage battery, and controls a DC output voltage based on the target voltage obtained through table lookup. If the target voltage obtained through table lookup is greater than a maximum operating voltage of the 12V storage battery, the maximum operating voltage of the 12V storage battery is used for execution. In this example, the powertrain control unit PCU 50 transfers the remaining energy, for example, a recycled power P3 to the direct current DC converter. After voltage conversion by the DC converter, electrical energy of the recycled power P3 is transferred to the 12V storage battery to charge the 12V storage battery. The 12V storage battery is configured to implement power supply to a low-voltage electrical device in the vehicle. This method can fully utilize a recycled power of energy, thereby significantly improving the charging rate of the 12V storage battery. If the powertrain control unit PCU 50 receives B_Recycle2 = 0 of the CAN bus, the target charging voltage of the 12V storage battery is maintained at a specific value.

The method provided in this embodiment utilizes recycled energy more accurately, so that not only the utilization of recycled energy at low temperatures can be improved and the non-driving power consumption of the system is reduced, but also the effect of improving the driving range at low temperatures can be further achieved. Moreover, the temperature rise time for the passenger compartment and the battery can be shortened, thereby improving the comfort in the passenger compartment, and ensuring that the battery can operate at an optimal temperature boundary as soon as possible without adding any hardware costs.

Further, in the foregoing embodiment in which the thermal management system TMS 20 implements power supply to an electrical device, it is set that under conditions that an environmental temperature is -20°C, an average vehicle speed is 40 km/h, a deceleration is -1.5 m/s², and no slope exists, the recyclable power is 27 kw. When SOC = 30%, the recyclable power of the battery is 5 kw. The PTC demanded power calculated based on a current strategy is 4 kw, and the corresponding PTC target outlet temperature is 40°C. In this case, the remaining recycled power Delt_Precycle1 = 18 kw cannot be used. In the method provided in the embodiments of the present application, based on Delt_Precyclel = 18 kw, the PTC target outlet temperature is increased to 60°C. In this case, the corresponding PTC power is 9 kw. This is equivalent to additional 5 kw being recycled for the recycled power, and the energy recycle efficiency is increased from 33% to 52%.

In addition, after the PTC target water temperature is increased from the original 40°C to 60°C, the temperature rise time for the passenger compartment and the battery is reduced by approximately 33%, so that the passenger compartment has better comfort, and the battery can reach a target operating temperature more quickly.

In the foregoing embodiment in which power supply to the 12V storage battery is implemented through the powertrain control unit PCU 50, it may be calculated that the second power P2 = Delt_Precycle2 = 13 kw. The power is far greater than the power demand of the 12V storage battery, and the charging voltage is increased from 12V to 15V, so that a charging current can be doubled.

This embodiment further provides a control apparatus for in-vehicle recyclable energy. The apparatus is configured to implement the foregoing embodiments and preferred embodiments, and content that has been described is no longer repeated. As used herein, the term "module" refers to a combination of software and/or hardware configured to implement a predetermined function. Although the apparatus described in the following embodiments is preferably implemented in software, implementation via hardware, or a combination of software and hardware is also possible and contemplated.

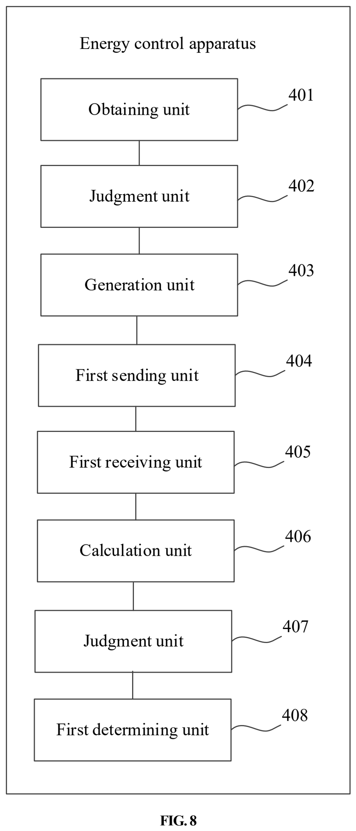

This embodiment provides a control apparatus for in-vehicle recyclable energy, configured to implement the foregoing control method for in-vehicle recyclable energy shown in FIG. 2 to FIG. 4. As shown in FIG. 8, the apparatus includes an obtaining unit 401, a judgment unit 402, a generation unit 403, and a first sending unit 404. In addition, the apparatus may further include other more or fewer units or modules.

The obtaining unit 401 is configured to obtain a first power during vehicle operation, where the first power is a residual power calculated by subtracting a recycled power of an in-vehicle traction battery from a total recyclable power of the vehicle.

The judgment unit 402 is configured to determine whether the first power is greater than or equal to a first preset value.

The generation unit 403 is configured to generate a first control signal when it is determined that the first power is greater than or equal to the first preset value, where the first control signal includes the first power and a first status flag, and the first status flag indicates that surplus energy is output during the vehicle operation.

The first sending unit 404 is configured to send the first control signal to a thermal management system TMS, where the first control signal is configured for controlling the thermal management system TMS to power an in-vehicle electrical device using the surplus energy.

Optionally, in some implementations, the obtaining unit 401 is further configured to obtain a current recyclable power of the vehicle and a recycled power of the traction battery under a specific temperature condition and a specific state of charge SOC parameter, and calculate a power difference between the current recyclable power and the recycled power to obtain the first power.

Optionally, in some other possible implementations, the generation unit 403 is further configured to generate a second control signal when the judgment unit determines that the first power is less than the first preset value, where the second control signal includes the first power and a second status flag, and the second status flag indicates that no surplus energy is output during the vehicle operation.

The first sending unit 404 is further configured to send the second control signal to the thermal management system TMS, where the second control signal is configured for controlling the thermal management system TMS to power the electrical device based on an original output power.

Optionally, in some other possible implementations, the generation unit 403 is further configured to generate a third control signal when the surplus energy remains after energy is supplied to the electrical device, where the third control signal includes a second power and a third status flag, and the third status flag indicates that the surplus energy remains.

The first sending unit 404 is further configured to send the third control signal to a powertrain control unit PCU, where the third control signal is configured for controlling the powertrain control unit PCU to charge an in-vehicle storage battery using the surplus energy.

Optionally, in some other possible implementations, the foregoing apparatus further includes a first receiving unit 405, a calculation unit 406, a judgment unit 407, and a first determining unit 408.

The first receiving unit 405 is configured to receive indication information from the thermal management system TMS, where the indication information includes a demanded power of the thermal management system TMS for powering the electrical device.

The calculation unit 406 is configured to calculate a power difference between the first power and the demanded power to obtain the second power.

The judgment unit 407 is further configured to determine whether the second power is greater than or equal to a second preset value.

The first determining unit 408 is configured to determine that the surplus energy remains when the first judgment unit determines that the second power is greater than or equal to the second preset value.

Optionally, the foregoing apparatus may be an IBCU, or a chassis controller including the apparatus.

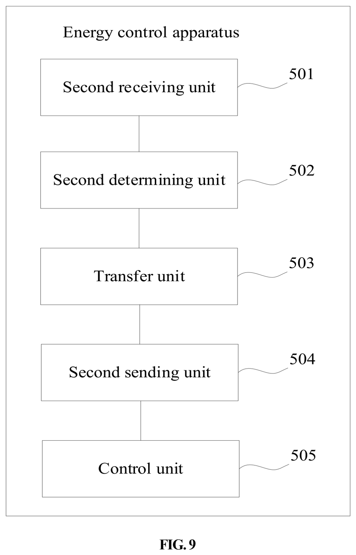

In addition, this embodiment further provides a control apparatus for in-vehicle recyclable energy, configured to implement the foregoing method shown in FIG. 5. As shown in FIG. 9, the apparatus includes a second receiving unit 501, a second determining unit 502, a transmission unit 503, a second sending unit 504, and a control unit 505. In addition, the apparatus may further include other more or fewer units or modules.

Further, the second receiving unit 501 is configured to receive a first control signal sent by a chassis controller, where the first control signal includes a first power and a first status flag.

The second determining unit 502 is configured to determine that surplus energy is output during vehicle operation based on the first status flag, where the surplus energy corresponds to the first power; and search a first preset relationship based on the first power for a matching first outlet temperature, and determine an operating level and a demanded power of a high-pressure heater corresponding to the first outlet temperature.

The transfer unit 503 is configured to transfer the surplus energy to an electrical device based on the operating level and the demanded power.

The second sending unit 504 is configured to send indication information to the chassis controller after the operating level and the demanded power of the high-pressure heater corresponding to the first outlet temperature are determined, where the indication information includes the demanded power for powering the electrical device.

Optionally, in a possible implementation of this embodiment, the second receiving unit 501 is further configured to receive a second control signal sent by the chassis controller, where the second control signal includes a second power and a second status flag.

The second determining unit 502 is further configured to determine that no surplus energy is output during the vehicle operation based on the second status flag.

The control unit 505 is configured to control the high-pressure heater to power the electrical device based on an original level and power.

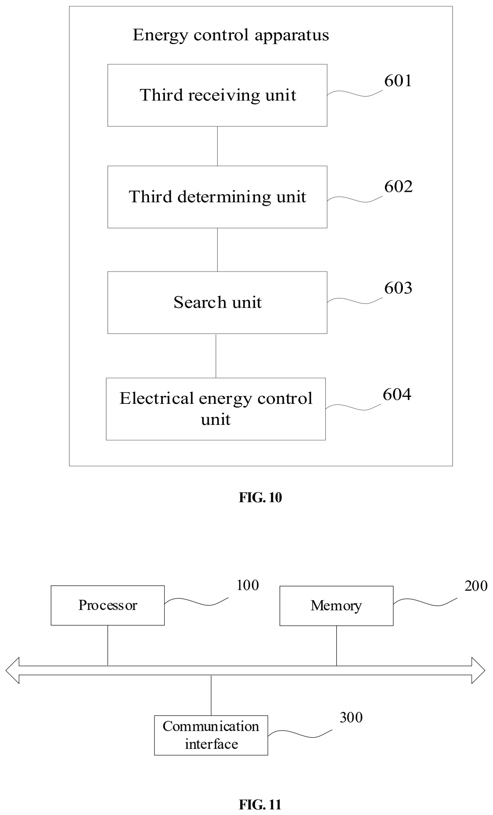

In addition, this embodiment further provides another energy control apparatus, configured to implement the foregoing method shown in FIG. 6. As shown in FIG. 10, the apparatus includes a third receiving unit 601, a third determining unit 602, a search unit 603, and an electrical energy control unit 604. In addition, the apparatus may further include other more or fewer units or modules. This is not limited in this embodiment.

The third receiving unit 601 is configured to receive a third control signal sent by a chassis controller, where the third control signal includes a second power and a third status flag.

The third determining unit 602 is configured to determine that surplus energy remains during vehicle operation based on the third status flag, where the surplus energy corresponds to the second power.

The search unit 603 is configured to search a second preset relationship based on the second power for a matching target charging voltage.

The electrical energy control unit 604 is configured to charge an in-vehicle storage battery using the surplus energy based on the target charging voltage.

It should be noted that the energy control apparatus in this embodiment is presented in the form of a functional unit. The unit refers to an ASIC circuit, a processor and a memory executing one or more software or fixed programs, and/or other devices that can provide the above functions.

Further functional descriptions of each of the above modules and units are identical to the corresponding embodiments described above, and details are not be described herein.

Embodiments of the present application further provide an electronic device, including the foregoing energy control apparatus shown in FIG. 8 to FIG. 10.

FIG. 11 is a schematic structural diagram of an electronic device according to an optional embodiment of the present application. As shown in FIG. 11, the electronic device includes one or more processors 100, a memory 200, and interfaces for connecting components, including high-speed and low-speed interfaces. The components are communicatively connected to each other by different buses and may be installed on a common motherboard or installed in other configurations as required The processor executes instructions within the electronic device, including instructions stored in or on the memory to display graphical information for a GUI on an external input/output apparatus (e.g., a display device coupled to the interfaces).

In some optional embodiments, multiple processors and/or multiple buses may be employed with multiple memories when necessary. Similarly, multiple electronic devices may be connected, each providing part of necessary operations (e.g., as a server array, a blade server group, or a multiprocessor system). One processor 100 is used as an example in FIG. 11.

The processor 100 may be a central processing unit. The processor 100 may further include a hardware chip. The aforementioned hardware chip may be an application-specific integrated circuit, a programmable logic device, or a combination thereof. The programmable logic device may be a complex programmable logic device, a field-programmable gate array, a generic array logic, or any combination thereof.

The memory 200 stores instructions executable by at least one processor 100, enabling the at least one processor 100 to perform the methods shown in the aforementioned embodiments.

The memory 200 may include a program storage area and a data storage area. The program storage area may store an operating system and an application required for at least one function. The data storage area may store data created according to the use of an electronic device and the like. Moreover, the memory 200 may include a high-speed random access memory (RAM), and may further include a non-transitory memory, for example, at least one magnetic disk storage device, flash storage device, or other non-transitory solid state storage device. In some optional embodiments, the memory 200 optionally includes memories disposed remotely with respect to the processor 100. These remote memories may be connected to the electronic device by a network. An example of the foregoing network includes, but not limited to, the internet, an intranet, a local area network, a mobile communication network, and a combination thereof.

The memory 200 may include a volatile memory, for example, a random access memory; the memory may further include a non-volatile memory, for example, a flash memory, a hard disk drive, or a solid-state drive; and the memory 200 may further include a combination of the aforementioned types of memories.

The electronic device further includes an input/output apparatus. The processor 100, the memory 200, the input apparatus, and the output apparatus may be connected through a bus or in another manner.

The input apparatus may receive input numeric or character information and generate key signal inputs related to user settings and functional control of the electronic device, and is, for example, a touchscreen, a keypad, a mouse, a trackpad, a touchpad, a pointing stick, one or more mouse buttons, a trackball, or a joystick. The output apparatus may include a display device, an auxiliary lighting apparatus (e.g., an LED), a haptic feedback apparatus (e.g., a vibration motor), and the like. The aforementioned display device includes, but is not limited to, a liquid crystal display, a light-emitting diode, a display, and a plasma display. In some optional implementations, the display device may be a touchscreen.

The electronic device further includes a communication interface 300, configured to enable communication between the electronic device and another device or communication network.

Optionally, the foregoing electronic device may be a chassis controller, for example, an IBCU, or any one of a thermal management system 20, a high-pressure heater 30, a battery management system 40, and a powertrain control unit PCU 50. In addition, the electronic device may alternatively be another unit or device. This is not limited in this embodiment.

In addition, this embodiment further provides a control system for in-vehicle recyclable energy. The structure of the system may be, for example, the foregoing structure shown in FIG. 1. The system includes a chassis controller, a thermal management system TMS, a powertrain control unit PCU, a high-pressure heater, an electrical device, a DC converter, a storage battery, among other units or modules.

The chassis controller is connected to the thermal management system TMS and the powertrain control unit PCU, the thermal management system TMS is connected to the electrical device through the high-pressure heater, and the powertrain control unit PCU is connected to the storage battery through the DC converter.

Further, the chassis controller is configured to perform the control method for in-vehicle recyclable energy in the foregoing embodiments. The thermal management system TMS is configured to perform the control method for in-vehicle recyclable energy in the foregoing embodiments, and supply energy to the electrical device through the high-pressure heater. The powertrain control unit PCU is configured to perform the energy control method in the foregoing embodiments, and charge the storage battery through the DC converter.

The system provided in the present application implements closed-loop control. The total recyclable power of electricity of the vehicle is first obtained, when it is determined that the power reaches the first preset value, the first control signal carrying the first power and the first status flag is then generated, and the first control signal is sent to the thermal management system TMS, to enable the thermal management system TMS to transfer the surplus energy corresponding to the recyclable power to the in-vehicle electrical device based on the first control signal to implement power supply to the electrical device, thereby improving the utilization of surplus energy.

In addition, if the surplus energy still remains, the powertrain control unit PCU is controlled through the second control signal to transfer the remaining surplus energy to the storage battery, thereby achieving the full utilization of surplus energy. This method utilizes recycled energy more accurately, so that not only the utilization of recycled energy at low temperatures is improved and the non-driving power consumption of the system is reduced, but also the effect of improving the driving range at low temperatures can be further achieved. Moreover, the temperature rise time for the passenger compartment and the battery is further shortened, thereby improving the comfort in the passenger compartment, and ensuring that the battery can operate at an optimal temperature boundary as soon as possible without adding any hardware costs.

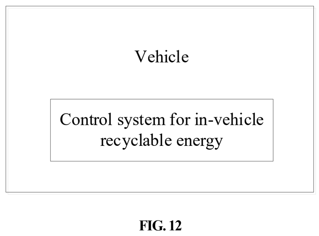

In addition, this embodiment further provides a vehicle. As shown in FIG. 12, the vehicle includes the control system for in-vehicle recyclable energy shown in FIG. 1.

Embodiments of the present application further provide a computer-readable storage medium. The methods according to the embodiments of the present application may be implemented in hardware or firmware, or may be implemented as computer code recorded on a storage medium, or implemented as computer code that is downloadable via a network, originally stored in a remote storage medium or non-transitory machine-readable storage medium, and subsequently stored in a local storage medium. Thus, the methods described herein may be processed by such software stored on a storage medium utilizing general-purpose computers, dedicated processors, or programmable/dedicated hardware.

The storage medium may be a magnetic disk, an optical disc, a read-only memory, a random access memory, a flash memory, a hard disk drive, or a solid-state drive. Further, the storage medium may further include combinations of the aforementioned types of memories. It should be understood that computers, processors, microprocessor controllers, or programmable hardware include storage components capable of storing or receiving software or computer code. When accessed and executed by the computers, processors, or hardware, the software or computer code implements the methods illustrated in the above embodiments.

The above embodiments are merely preferred embodiments provided to fully illustrate the present application, and the scope of protection of the present application is not limited thereto. Any equivalent substitution or modification made by those skilled in the art based on the present application shall fall within the scope of protection of the present application.

## Claims

1. A control method for in-vehicle recyclable energy, **characterized in that** the method is applied to a chassis controller, comprising:
obtaining a first power during vehicle operation, wherein the first power is a residual power calculated by subtracting a recycled power of an in-vehicle traction battery from a total recyclable power of the vehicle;
determining whether the first power is greater than or equal to a first preset value;
if the first power is greater than or equal to the first preset value, generating a first control signal, wherein the first control signal comprises the first power and a first status flag, and the first status flag indicates that surplus energy is output during the vehicle operation; and
sending the first control signal to a thermal management system TMS, wherein the first control signal is configured for controlling the thermal management system TMS to power an in-vehicle electrical device using the surplus energy.

2. The method according to claim 1, **characterized in that** the step of obtaining a first power comprises:
obtaining a current recyclable power of the vehicle and a recycled power of the traction battery under a specific temperature condition and a specific state of charge SOC parameter; and
calculating a power difference between the current recyclable power and the recycled power to obtain the first power.

3. The method according to claim 1, **characterized in that** the method further comprises:
generating a second control signal if the first power is less than the first preset value, wherein the second control signal comprises the first power and a second status flag, and the second status flag indicates that no surplus energy is output during the vehicle operation; and
sending the second control signal to the thermal management system TMS, wherein the second control signal is configured for controlling the thermal management system TMS to power the electrical device based on an original output power.

4. The method according to any one of claims 1 to 3, **characterized in that** after the step of sending the first control signal to a thermal management system TMS, the method further comprises:
generating a third control signal when the surplus energy remains after energy is supplied to the electrical device, wherein the third control signal comprises a second power and a third status flag, and the third status flag indicates that the surplus energy remains; and
sending the third control signal to a powertrain control unit PCU, wherein the third control signal is configured for controlling the powertrain control unit PCU to charge an in-vehicle storage battery using the surplus energy.

5. The method according to claim 4, **characterized in that** it is determined that the surplus energy remains after energy is supplied to the electrical device, comprising:
receiving indication information from the thermal management system TMS, wherein the indication information comprises a demanded power of the thermal management system TMS for powering the electrical device;
calculating a power difference between the first power and the demanded power to obtain the second power;
determining whether the second power is greater than or equal to a second preset value; and
if the second power is greater than or equal to the second preset value, determining that the surplus energy remains.

6. A control method for in-vehicle recyclable energy, **characterized in that** the method is applied to a thermal management system TMS, the method comprising:
receiving a first control signal sent by a chassis controller, wherein the first control signal comprises a first power and a first status flag;
determining that surplus energy is output during vehicle operation based on the first status flag, wherein the surplus energy corresponds to the first power;
searching a first preset relationship based on the first power for a matching first outlet temperature, and determining an operating level and a demanded power of a high-pressure heater corresponding to the first outlet temperature; and
transferring the surplus energy to an electrical device based on the operating level and the demanded power.

7. The method according to claim 6, **characterized in that** after the step of determining an operating level and a demanded power of a high-pressure heater corresponding to the first outlet temperature, the method further comprises:
sending indication information to the chassis controller, wherein the indication information comprises the demanded power for powering the electrical device.

8. The method according to claim 6 or 7, **characterized in that** the method further comprises:
receiving a second control signal sent by the chassis controller, wherein the second control signal comprises a second power and a second status flag;
determining that no surplus energy is output during the vehicle operation based on the second status flag; and
controlling the high-pressure heater to power the electrical device based on an original level and power.

9. A control method for in-vehicle recyclable energy, **characterized in that** the method is applied to a powertrain control unit PCU, the method comprising:
receiving a third control signal sent by a chassis controller, wherein the third control signal comprises a second power and a third status flag;
determining that surplus energy remains during vehicle operation based on the third status flag, wherein the surplus energy corresponds to the second power;
searching a second preset relationship based on the second power for a matching target charging voltage; and
charging an in-vehicle storage battery using the surplus energy based on the target charging voltage.

10. A control apparatus for in-vehicle recyclable energy, **characterized in that** the apparatus comprising:
an obtaining unit, configured to obtain a first power during vehicle operation, wherein the first power is a residual power calculated by subtracting a recycled power of an in-vehicle traction battery from a total recyclable power of the vehicle;
a judgment unit, configured to determine whether the first power is greater than or equal to a first preset value;
a generation unit, configured to generate a first control signal when it is determined that the first power is greater than or equal to the first preset value, wherein the first control signal comprises the first power and a first status flag, and the first status flag indicates that surplus energy is output during the vehicle operation; and
a first sending unit, configured to send the first control signal to a thermal management system TMS, wherein the first control signal is configured for controlling the thermal management system TMS to power an in-vehicle electrical device using the surplus energy.

11. The apparatus according to claim 10, **characterized in that**
the obtaining unit is further configured to obtain a current recyclable power of the vehicle and a recycled power of the traction battery under a specific temperature condition and a specific state of charge SOC parameter, and calculate a power difference between the current recyclable power and the recycled power to obtain the first power.

12. The apparatus according to claim 11, **characterized in that**
the generation unit is further configured to generate a second control signal when the judgment unit determines that the first power is less than the first preset value, wherein the second control signal comprises the first power and a second status flag, and the second status flag indicates that no surplus energy is output during the vehicle operation; and
the first sending unit is further configured to send the second control signal to the thermal management system TMS, wherein the second control signal is configured for controlling the thermal management system TMS to power the electrical device based on an original output power.

13. The apparatus according to any one of claims 10 to 12, **characterized in that**
the generation unit is further configured to generate a third control signal when the surplus energy remains after energy is supplied to the electrical device, wherein the third control signal comprises a second power and a third status flag, and the third status flag indicates that the surplus energy remains; and
the first sending unit is further configured to send the third control signal to a powertrain control unit PCU, wherein the third control signal is configured for controlling the powertrain control unit PCU to charge an in-vehicle storage battery using the surplus energy.

14. The apparatus according to claim 13, **characterized in that** the apparatus further comprises a first receiving unit, a calculation unit, a judgment unit, and a first determining unit, wherein
the first receiving unit is configured to receive indication information from the thermal management system TMS, wherein the indication information comprises a demanded power of the thermal management system TMS for powering the electrical device;
the calculation unit is configured to calculate a power difference between the first power and the demanded power to obtain the second power;
the judgment unit is further configured to determine whether the second power is greater than or equal to a second preset value; and
the first determining unit is configured to determine that the surplus energy remains when the judgment unit determines that the second power is greater than or equal to the second preset value.

15. A control apparatus for in-vehicle recyclable energy, **characterized in that** the apparatus comprising:
a second receiving unit, configured to receive a first control signal sent by a chassis controller, wherein the first control signal comprises a first power and a first status flag;
a second determining unit, configured to determine that surplus energy is output during vehicle operation based on the first status flag, wherein the surplus energy corresponds to the first power; and search a first preset relationship based on the first power for a matching first outlet temperature, and determine an operating level and a demanded power of a high-pressure heater corresponding to the first outlet temperature; and
a transfer unit, configured to transfer the surplus energy to an electrical device based on the operating level and the demanded power.

16. The apparatus according to claim 15, **characterized in that** the apparatus further comprises:
a second sending unit, configured to send indication information to the chassis controller after the operating level and the demanded power of the high-pressure heater corresponding to the first outlet temperature are determined, wherein the indication information comprises the demanded power for powering the electrical device.

17. The apparatus according to claim 15 or 16, **characterized in that**
the second receiving unit is further configured to receive a second control signal sent by the chassis controller, wherein the second control signal comprises a second power and a second status flag;
the second determining unit is further configured to determine that no surplus energy is output during the vehicle operation based on the second status flag; and
a control unit is configured to control the high-pressure heater to power the electrical device based on an original level and power.

18. A control apparatus for in-vehicle recyclable energy, **characterized in that** the apparatus comprising:
a third receiving unit, configured to receive a third control signal sent by a chassis controller, wherein the third control signal comprises a second power and a third status flag;
a third determining unit, configured to determine that surplus energy remains during vehicle operation based on the third status flag, wherein the surplus energy corresponds to the second power;
a search unit configured to search a second preset relationship based on the second power for a matching target charging voltage; and
an electrical energy control unit, configured to charge an in-vehicle storage battery using the surplus energy based on the target charging voltage.

19. An electronic device, **characterized by** comprising a memory and a processor, wherein the memory is connected to the processor;
the memory stores computer instructions; and
the processor executes the computer instructions to perform the control method for in-vehicle recyclable energy according to any one of claims 1 to 5, or any one of claims 6 to 8, or claim 9.

20. A control system for in-vehicle recyclable energy, **characterized in that** the system comprises a chassis controller, a thermal management system TMS, a powertrain control unit PCU, a high-pressure heater, an electrical device, a DC converter, and a storage battery, wherein
the chassis controller is connected to the thermal management system TMS and the powertrain control unit PCU, the thermal management system TMS is connected to the electrical device through the high-pressure heater, and the powertrain control unit PCU is connected to the storage battery through the DC converter;
the chassis controller is configured to perform the method according to any one of claims 1 to 5;
the thermal management system TMS is configured to perform the method according to any one of claims 6 to 8, and supply energy to the electrical device through the high-pressure heater; and
the powertrain control unit PCU is configured to perform the method according to claim 9, and charge the storage battery through the DC converter.

21. A vehicle, **characterized by** comprising the control system for in-vehicle recyclable energy according to claim 20.

22. A computer-readable storage medium, **characterized in that** the computer-readable storage medium has computer instructions stored therein, and the computer instructions are configured to enable a computer to perform the control method for in-vehicle recyclable energy according to any one of claims 1 to 5, or any one of claims 6 to 8, or claim 9.
